(19) Europäisches Patentamt
European Patent Office
Office européen des brevets

(11) **EP 1 266 441 B1**

(12) **FASCICULE DE BREVET EUROPEEN**

(45) Date de publication et mention
de la délivrance du brevet:
**02.05.2018 Bulletin 2018/18**

(21) Numéro de dépôt: **01914849.3**

(22) Date de dépôt: **13.03.2001**

(51) Int Cl.:
*B60L 7/06* (2006.01)      *H02M 1/12* (2006.01)

(86) Numéro de dépôt international:
**PCT/BE2001/000044**

(87) Numéro de publication internationale:
**WO 2001/069765 (20.09.2001 Gazette 2001/38)**

(54) **DISPOSITIF ET PROCEDE DE REDUCTION D'HARMONIQUES DANS LES CONVERTISSEURS DE PUISSANCE**

VORRICHTUNG UND VERFAHREN ZUR REDUKTION VON OBERWELLEN IN LEISTUNGSWANDLERN

METHOD AND DEVICE FOR REDUCING HARMONICS IN POWER CONVERTERS

(84) Etats contractants désignés:
**AT BE CH CY DE DK ES FI FR GB GR IE IT LI LU MC NL PT SE TR**

(30) Priorité: **13.03.2000 EP 00870042**

(43) Date de publication de la demande:
**18.12.2002 Bulletin 2002/51**

(73) Titulaire: **ALSTOM BELGIUM S.A.**
**6001 Charleroi (BE)**

(72) Inventeur: **BOU SAADA, Johnny**
**B-1190 Bruxelles (BE)**

(74) Mandataire: **Lavoix**
**2, place d'Estienne d'Orves**
**75441 Paris Cedex 09 (FR)**

(56) Documents cités:
**EP-A- 0 913 918    DE-A- 3 912 706**
**DE-A- 19 651 281    GB-A- 2 232 835**
**US-A- 4 339 697    US-A- 4 638 417**
**US-A- 5 933 339**

• **AKIRA HORIE ET AL.: "IGBT inverter system for rolling stock" HITACHI REVIEW, vol. 46, no. 2, 1997, pages 57-60, XP000736001**

## Description

### Objet de l'invention

La présente invention se rapporte à un dispositif et un procédé de réduction d'harmoniques gênants générés dans un convertisseur de puissance.

### Etat de la technique

L'électronique de puissance travaille généralement en commutations, ce qui provoque la création d'harmoniques. De plus, un système de puissance est constitué de sous-systèmes travaillant chacun à une fréquence propre. La combinaison de ces différentes fréquences est la source d'harmoniques par phénomène de battement.

Un battement est la variation périodique de l'amplitude d'une oscillation résultant de la superposition de deux fréquences voisines.

Généralement, on essaie de découpler ces sous-systèmes par l'utilisation de filtres comportant des selfs (L) et des capacités (C).

Dans le cas des onduleurs triphasés pour moteurs à propulsion dans les applications ferroviaires, par exemple, il a été par ailleurs proposé un traitement des ondes PWM par correction de consigne dans un discriminateur (publication WO96/33548). Ce procédé permet d'annuler les temps morts au niveau des consignes de commutation et donc de réduire significativement les harmoniques indésirables, en particulier, les harmoniques d'ordre 5 et 7 apparaissant dans les courants moteur et l'harmonique d'ordre 6 apparaissant côté alimentation et côté couple moteur.

Toutefois la modification de configuration du système est souvent limitée par les pertes des semiconducteurs ou encore par la physique du système.

Un grand nombre de documents, et parmi eux les documents US-A-4638417, DE-A-19651281, DE-A-3912706, GB-A-2232835 et US-A-4339697, ont proposé d'appliquer une consigne variable, et dans certains cas de fréquence aléatoire, aux ondes PWM destinées à commander l'onduleur, et ceci essentiellement dans le but de réduire le bruit.

### Buts de l'invention

La présente invention vise à proposer un dispositif simple qui permette de réduire, voire d'annuler, les harmoniques provenant de la composition des différentes fréquences de commutation dans les convertisseurs de puissance à plusieurs étages.

La présente invention vise en particulier à proposer un dispositif et un procédé qui puissent être appliqués à un système comportant au moins deux des sous-systèmes fonctionnels suivants : hacheur de freinage rhéostatique, onduleur/ redresseur.

### Principaux éléments caractéristiques de l'invention

La présente invention se rapporte à un dispositif et un procédé de réduction des amplitudes des harmoniques indésirables dans les convertisseurs de puissance à plusieurs étages de commutation, dans lequel le(s) commutateur(s) d'au moins un desdits étages est(sont) commandé(s) par des impulsions de fréquence aléatoire variable.

Selon l'invention, on entend par "convertisseur de puissance" un dispositif de commutation de puissance constitué par plusieurs sous-systèmes fonctionnels comprenant un filtre d'entrée, un hacheur de freinage rhéostatique, un onduleur ou redresseur multiniveaux.

De manière classique, le hacheur est constitué par au moins deux commutateurs de préférence de type IGBT et disposés en série, chacun étant disposé en parallèle avec une diode disposée en sens inverse, l'ensemble commutateur / diode en sens inverse étant en série avec une résistance.

Classiquement, une branche d'un onduleur multiniveaux, par exemple d'un onduleur trois niveaux, est constituée d'au moins quatre commutateurs, de préférence de type IGBT, couplés deux à deux. Chaque commutateur est en parallèle avec une diode disposée en sens inverse.

Selon l'invention, ce seront seulement les commutateurs du hacheur qui seront commandés par des impulsions de fréquence aléatoire variable.

Ainsi, le dispositif selon la présente invention comprend un générateur d'ondes constituées d'impulsions de fréquence aléatoire variable destinées à commander les commutateurs du hacheur.

De préférence, la fréquence obéit à une distribution de Gauss dont l'écart-type est compris entre 15 et 35% de la moyenne.

Avantageusement, la moyenne correspond à la fréquence fixe utilisées habituellement pour commander les commutateurs considérés.

Selon un exemple particulier, la fréquence moyenne de commande du hacheur est comprise entre 600 et 900 Hz et l'écart-type est compris entre 150 et 250 Hz.

Selon une caractéristique importante de la présente invention, l'onduleur multiniveaux est directement accolé au hacheur, c'est-à-dire que le hacheur sera relié à l'onduleur par son point milieu.

Ceci signifie que l'on peut éviter ainsi la présence d'un diviseur capacitif intermédiaire séparé pour le hacheur.

## Brève description des dessins

La figure 1 représente le schéma de principe d'un convertisseur à deux étages selon l'état de la technique.

La figure 2 représente le schéma de principe d'un convertisseur utilisant le dispositif et le procédé de réduction d'harmoniques selon la présente invention.

La figure 3 représente une forme d'onde appliquée à la commande d'un onduleur, avec trois angles de commutation $\alpha_1$, $\alpha_2$, $\alpha_3$.

La figure 4 représente le signal de commande, avec son signal de consigne, appliqué au hacheur de freinage rhéostatique selon l'invention.

## Description de l'état de la technique

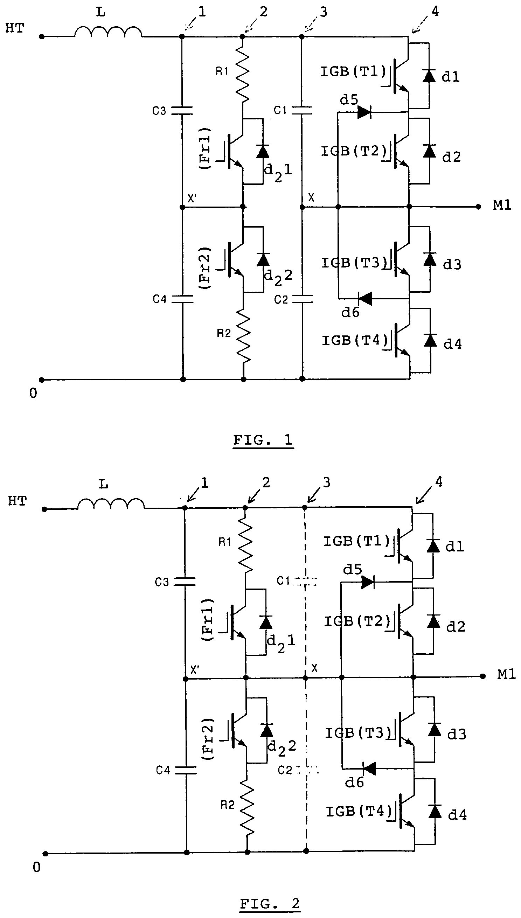

La figure 1 représente un convertisseur à deux étages selon l'état de la technique. Il est constitué de manière classique de plusieurs sous-ensembles : filtre d'entrée 1, hacheur de freinage 2 et onduleur 4. Une seule branche d'un onduleur à trois niveaux a été représentée dans le présent cas.

De manière classique, le filtre d'entrée est constitué d'une self L et d'une ou plusieurs capacités C3 et C4.

Le hacheur de freinage 2 est constitué de deux commutateurs Fr1 et Fr2, de préférence de type IGBT et disposés en série, chacun de ces commutateurs étant en parallèle avec une diode disposée en sens inverse Dr1 et Dr2, l'ensemble commutateur / diode inverse étant en série avec une résistance R1 et R2 qui permet de dissiper l'énergie qui n'est pas consommée par la charge M1.

En outre, pour assurer la tenue en tension, un diviseur capacitif 1 pour le hacheur constitué des deux capacités C3 et C4 est prévu.

Une branche d'un onduleur à trois niveaux est représentée de manière classique à la figure 1. Elle est constituée de quatre commutateurs, de préférence de type IGBT, couplés deux à deux (T1 et T2, T3 et T4). Sur chaque commutateur est disposée en parallèle une diode inverse D1 à D4. Un diviseur capacitif 3 constitué des deux capacités C1 et C2 est également disposé en parallèle sur l'onduleur 4.

Ainsi qu'on observera à la figure 1, habituellement, les points milieux du hacheur X' et X ne sont selon l'état de la technique pas reliés.

## Description d'une forme d'exécution préférée de l'invention

Selon la présente invention, ainsi que représenté à la figurer 2, on propose de relier les points milieux respectivement du hacheur et de l'onduleur (X et X'), disposés de ce fait entre les deux capacités. Ceci permet de manière particulièrement avantageuse de ne plus devoir prévoir un pont diviseur capacitif propre à chacun des sous-systèmes hacheur 2 / onduleur 4.

Le mode de fonctionnement de l'onduleur à trois niveaux 4 est totalement classique et permet de répartir la tension continue HT de la caténaire sur deux commutateurs IGBT en les faisant conduire par paires, d'abord les deux supérieurs (IGBT1, IGBT2), ensuite les deux intermédiaires (IGBT2, IGBT3) et enfin les deux inférieurs (IGBT3, IGBT4).

On procède ainsi à l'approximation d'une sinusoïde par trois niveaux de tension : HT, HT/2 et 0.

Un deuxième diviseur capacitif n'est donc plus nécessaire pour la fixation du potentiel intermédiaire et donc pour le bon fonctionnement de l'onduleur, car la liaison entre les points milieux X, X' permet une bonne répartition de la haute tension.

Par rapport à un onduleur à deux niveaux, le système à trois niveaux permet déjà de réduire le taux d'harmoniques, de par une meilleure approximation de la sinusoïde.

Comme la tension fournie par l'onduleur à la charge est symétrique par rapport à l'axe Oy, le développement en série de Fourier ne comporte que la fondamentale et des harmoniques impairs (ordre 3, 5, 7, 9, etc.) :

$$HT(t) = a_1 \sin(\omega t + \phi_1) + a_3 \sin(3\omega t + \phi_3) + a_5 \sin(5\omega t + \phi_5) + ...$$

où t est le temps, $\omega$ la fréquence angulaire fondamentale et $\phi_{2i-1}$ la phase correspondant à la fréquence $(2i-1)\omega$, i = 1, 2, 3, ...

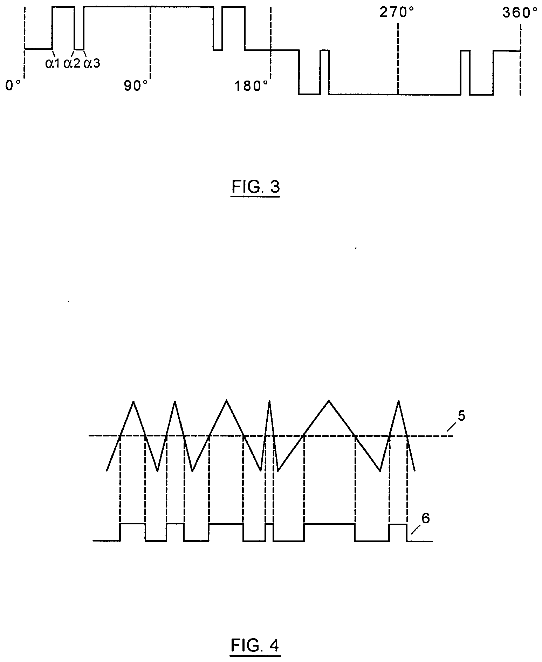

On peut montrer qu'il est possible d'obtenir un système de n équations linéaires à n inconnues où les coefficients $a_3$, $a_5$, $a_7$, ... sont exprimés en fonction des angles de commutation $\alpha_1$, $\alpha_2$, $\alpha_3$, ... A la figure 3, on a représenté une forme d'onde correspondant à trois angles de commutation $\alpha_1$, $\alpha_2$, $\alpha_3$.

En inversant le système d'équations, on peut alors exprimer les angles de commutation $\alpha_1$, $\alpha_2$, $\alpha_3$, ... en fonction des coefficients du développement en série de Fourier $a_3$, $a_5$, $a_7$, ...

Il est donc possible de calculer les angles de commutation requis pour annuler certains harmoniques, choisis au départ. En d'autres termes, le choix judicieux de la forme d'onde appliquée au sous-système onduleur permet d'éliminer, côté moteur, certains harmoniques, et en particulier les plus indésirables tels que les harmoniques d'ordre 5 et 7. Les harmoniques d'ordre 3 et multiples de 3 ne sont pas gênants côté moteur car on a affaire ici à un système triphasé à neutre isolé.

Habituellement, on essaie de ne pas incorporer le pont capacitif 3 (C1, C2) et, dans la mesure du possible, d'avoir le hacheur de freinage directement connecté à l'onduleur (X = X'). Dans ce cas de figure, le battement est inévitable et ne sera supprimé que si on prévoit une commande du hacheur comme décrit ci-dessous.

En fonctionnement normal, l'onduleur génère donc au point milieu X, X' des harmoniques dont les fréquences sont des multiples de 3 de la fréquence de travail. Par exemple, si l'onduleur fonctionne à 50 Hz, on retrouve au point milieu les fréquences 150, 300, 450 Hz, etc.

Dans l'exemple repris à la figure 2, le hacheur de freinage, accolé directement à l'onduleur, fonctionne à sa propre fréquence (par exemple 800 Hz). Cette fréquence est susceptible de se combiner avec tous les harmoniques présents au point milieu pour former un battement. Ce battement est bien sûr d'autant plus intense que les fréquences sont proches.

En effet, si f1 est la fréquence harmonique de l'onduleur et f2 la fréquence du hacheur, on obtient deux battements de fréquence (f1+f2)/2 et (f1-f2)/2.

Pour contrer ce phénomène, il suffit de prévoir d'utiliser une fréquence aléatoire pour la commande du hacheur. La distribution de cette fréquence est par exemple une distribution gaussienne de valeur moyenne égale à la fréquence habituelle de travail $f_0$ = 800 Hz et présentant un écart-type de l'ordre de $\Delta f$ = 200 Hz. La figure 3 donne un exemple de signal de commande 6 des IGBT de hachage (IGBT Fr1, IGBT Fr2), à fréquence aléatoire. La consigne 5 donne le niveau du taux de modulation appliqué au hacheur.

Une forme d'exécution préférée de l'invention consiste à générer un signal d'entrée qui est un échantillonnage d'une fonction sinus sur un intervalle de temps fini (par exemple 1 échantillon toutes les 10 ms sur un intervalle d'une seconde) et dont la fréquence change au cours du temps en utilisant un générateur de nombre aléatoire.

Par rapport à la fréquence unique, les pertes de commutation dans les composants de puissance sont les mêmes.

La solution préconisée par l'invention a cependant plusieurs avantages importants :

- réduction des battements d'autant plus marquée que l'écart-type est grand ;
- diminution du bruit du système ;
- suppression possible du diviseur capacitif entre le hacheur et l'onduleur.

## Revendications

**1.** Dispositif électronique de commutation de puissance à plusieurs étages permettant de réduire les amplitudes des harmoniques indésirables générés dans ledit dispositif, en particulier sous forme de battement, comprenant au moins un filtre d'entrée (1), un hacheur de freinage rhéostatique (2) comprenant au moins deux commutateurs (Fr1, Fr2) et un onduleur multiniveaux (4) comprenant au moins quatre commutateurs en série (T1, T2, T3, T4), **caractérisé en ce que** l'onduleur (4) est directement accolé au hacheur (2) en prévoyant une liaison par leur point milieu (X = X') et **en ce qu'**il comprend un générateur d'impulsions de fréquence aléatoire variable commandant les commutateurs dudit hacheur (2) seulement.

**2.** Dispositif selon la revendication 1, **caractérisé en ce que** la fréquence aléatoire obéit à une distribution de Gauss de fréquence moyenne égale à la fréquence utilisée pour un dispositif équivalent à fréquence fixe.

**3.** Dispositif selon la revendication 1, **caractérisé en ce que** la fréquence aléatoire obéit à une distribution non gaussienne.

**4.** Dispositif selon l'une quelconque des revendications précédentes, **caractérisé en ce que** l'écart-type de la distribution est compris entre 15 et 35% de la fréquence moyenne.

**5.** Dispositif selon l'une quelconque des revendications précédentes, **caractérisé en ce que** les commutateurs de l'onduleur (4) sont commandés par des impulsions d'une onde PWM correspondant à des angles de commutation ($\alpha$1, 2, 3,...) calculés de manière à réduire ou annuler l'amplitude d'au moins un harmonique impair de la forme d'onde de tension fournie par ledit onduleur (4) à une charge (M1).

**6.** Procédé de réduction des amplitudes des harmoniques indésirables générés dans un dispositif de commutation de puissance à plusieurs étages comprenant au moins un filtre d'entrée (1), un hacheur de freinage rhéostatique (2) comprenant au moins deux commutateurs (Fr1,Fr2) et un onduleur multiniveaux (4) comprenant au moins quatre commutateurs (T1,T2,T3,T4), l'onduleur (4) étant directement accolé au hacheur (2) par une liaison reliant le point milieu (X) de l'onduleur (4) au point milieu (X') du hacheur (2), **caractérisé en ce que** seulement les commutateurs (Fr1,Fr2) du hacheur (2) sont commandés par des impulsions de fréquence aléatoire variable.

## Patentansprüche

**1.** Elektronische mehrstufige Leistungschaltvorrichtung, welche es erlaubt, die Amplituden von unerwünschten Harmonischen, welche in der Vorrichtung, insbesondere in Form einer Schwebung, erzeugt werden, zu verringern, aufweisend mindestens einen Eingangsfilter (1), einen rheostatischen Brems-Zerhacker (2), welcher mindestens zwei Schalter (Fr1, Fr2) aufweist, und einen mehrstufigen Wechselrichter (4), der mindestens vier Schalter in Serie (T1, T2, T3, T4) aufweist, **gekennzeichnet dadurch, dass** der Wechselrichter (4) an den Zerhacker (2) durch Vorsehen einer Verbindung mittels ihres Mittelpunkts (X = X') direkt angeschlossen ist und dass sie einen Erzeuger von Impulsen einer variable Zufallsfrequenz, welche nur die Schalter des Zerhackers (2) steuern, aufweist.

**2.** Vorrichtung gemäß dem Anspruch 1, **gekennzeichnet dadurch, dass** die Zufallsfrequenz einer Gauß-Verteilung von einer mittleren Frequenz, welche gleich der Frequenz, die für eine äquivalente Vorrichtung mit fester Frequenz genutzt wird, ist, folgt.

**3.** Vorrichtung gemäß dem Anspruch 1, **gekennzeichnet dadurch, dass** die Zufallsfrequenz einer nicht-gaußschen Verteilung folgt.

**4.** Vorrichtung gemäß irgendeinem der vorhergehenden Ansprüche, **gekennzeichnet dadurch, dass** die Standardabweichung der Verteilung zwischen 15 und 35% der mittleren Frequenz liegt.

**5.** Vorrichtung gemäß irgendeinem der vorhergehenden Ansprüche, **gekennzeichnet dadurch, dass** die Schalter des Wechselrichters (4) mittels PWM-Wellenimpulsen gesteuert werden, welche mit Schaltwinkeln ($\alpha$1, 2, 3) korrespondieren, die derart berechnet sind, dass die Amplitude von mindestens einer ungeradzahligen Harmonischen der Spannungswellenform, welche durch den Wechselrichter (4) an eine Last geliefert wird, verringert oder

**6.** Verfahren zur Verringerung von Amplituden von unerwünschten Harmonischen, welche in einer mehrstufigen Leistungschaltvorrichtung erzeugt werden, die mindestens einen Eingangsfilter (1), einen rheostatischen Brems-Zerhacker (2), welcher mindestens zwei Schalter (Fr1, Fr2) aufweist, und einen mehrstufigen Wechselrichter (4), der mindestens vier Schalter (T1, T2, T3, T4) aufweist, aufweist, wobei der Wechselrichter (4) an den Zerhacken (2) durch eine Verbindung, die den Mittelpunkt (X) des Wechselrichters (4) mit dem Mittelpunkt (X') des Zerhackers (2) verbindet, direkt angeschlossen ist, **gekennzeichnet dadurch, dass** nur die Schalter (Fr1, Fr2) des Zerhackers mittels Impulsen einer variablen Zufallsfrequenz gesteuert werden.

## Claims

**1.** Multi-stage electronic power switching device allowing the amplitudes of the undesirable harmonics generated in said device to be reduced, in particular in the form of beats, comprising at least one input filter (1), a rheostatic braking chopper (2) comprising at least two switches (Fr1, Fr2), and a multi-level inverter (4) comprising at least four switches in series (T1, T2, T3, T4), **characterised in that** the inverter (4) is attached directly to the chopper (2) by providing a connection by their mid-points (X = X'), and **in that** it comprises a variable random frequency pulse generator controlling the switches of said chopper (2) only.

**2.** Device according to claim 1, **characterised in that** the random frequency obeys a Gaussian distribution of average frequency equal to the frequency used for an equivalent device at fixed frequency.

3. Device according to claim 1, **characterised in that** the random frequency obeys a non-Gaussian distribution.

4. Device according to any one of the preceding claims, **characterised in that** the standard deviation of the distribution is between 15 and 35% of the average frequency.

5. Device according to any one of the preceding claims, **characterised in that** the switches of the inverter (4) are controlled by pulses of a PWM wave corresponding to switching angles ($\alpha$1, 2, 3, ...) calculated so as to reduce or eliminate the amplitude of at least one odd harmonic of the voltage waveform provided by said inverter (4) at a load (M1).

6. Method for reducing the amplitudes of the undesirable harmonics generated in a multi-stage power switching device comprising at least one input filter (1), a rheostatic braking chopper (2) comprising at least two switches (Fr1, Fr2), and a multi-level inverter (4) comprising at least four switches (T1, T2, T3, T4), the inverter (4) being attached directly to the chopper (2) by a connection connecting the mid-point (X) of the inverter (4) to the mid-point (X') of the chopper (2), **characterised in that** only the switches (Fr1, Fr2) of the chopper (2) are controlled by variable random frequency pulses.

FIG. 1

FIG. 2

7

FIG. 3

FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9633548 A
- US 4638417 A
- DE 19651281 A
- DE 3912706 A
- GB 2232835 A
- US 4339697 A